# EUROPEAN PATENT APPLICATION

(11) **EP 3 859 959 A1**
(43) Date of publication of application: **04.08.2021**
(21) Application number: 19866360.1
(22) Date of filing: 27.09.2019
(51) Int. Cl.: H02M 1/34

(54) **LIGHTNING SURGE PROTECTION CIRCUIT, METHOD AND SYSTEM, AND STORAGE MEDIUM AND ELECTRONIC APPARATUS**

(30) Priority: 29.09.2018 CN 201811152193
(71) Applicant: ZTE Corporation, shenzhen Guangdong 518057 (CN)
(72) Inventor: CHENG, Zhirong, Shenzhen, Guangdong 518057 (CN); WANG, Hong, Shenzhen, Guangdong 518057 (CN); YANG, Yundong, Shenzhen, Guangdong 518057 (CN); LIU, Mingming, Shenzhen, Guangdong 518057 (CN); WANG, Fangchun, Shenzhen, Guangdong 518057 (CN)
(74) Representative: Aipex B.V.
(86) International application number: PCT/CN2019/108610
(87) International publication number: WO 2020/063890

(57) **Abstract**

Provided are a lightning surge protection circuit, method and system, a storage medium, and an electronic apparatus. The circuit includes a first circuit (21) and a second circuit (22). An input end of the first circuit (21) is connected to an input end of the lightning surge protection circuit, and the first circuit is configured to perform a first-level lightning surge protection on a power factor correction main power topology circuit. An input end of the second circuit (22) is connected to an output end of the first circuit (21), an output end of the second circuit (22) is configured to be connected to an input end of the main power topology circuit, and the second circuit (22) is configured to perform a second-level lightning surge protection on the main power topology circuit. Each of the first circuit (21) and the second circuit (22) includes a piezoresistor and a gas discharge tube.

## Description

The present application claims priority to Chinese Patent Application No. 201811152193.7, filed with the CNIPA on Sep. 29, 2018, disclosure of which is incorporated herein by reference in its entirety.

### TECHNICAL FIELD

The present application relates to the field of communications, and for example to a lightning surge protection circuit, method and system, a storage medium, and an electronic apparatus.

### BACKGROUND

A switching power supply is a core component of a communication power supply system and supplies power to a communication equipment of a communication base station or a communication machine room. With the development of technology, the requirement on a switching power supply for communication in the related art is to be compatible with an alternating current and a high-voltage direct current input, and a highest voltage of the high-voltage direct current input may be more than 400V, so that a traditional alternating current lightning protection circuit is difficult to be compatible with an input of the high-voltage direct current.

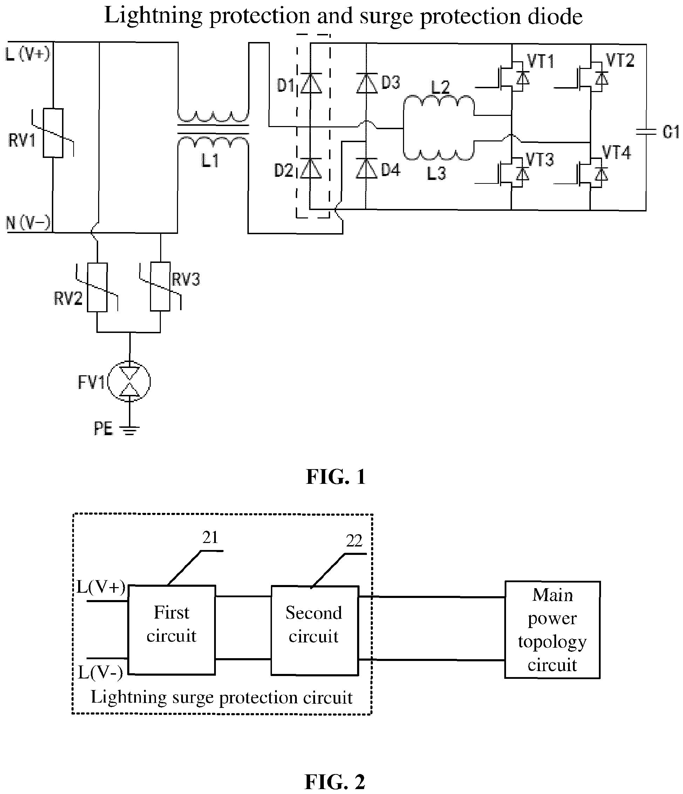

FIG. 1 is a schematic diagram of a lightning surge protection circuit of a switching power supply under alternating current and direct current input conditions in the related art, in FIG. 1, a power factor correction (PFC) main power topology circuit of the switching power supply is used as an example for illustration, and in practical applications, the main power topology circuit may also be other types of topology circuits in addition to the PFC main power topology circuit. In FIG. 1, a working voltage of a piezoresistor used by this circuit is higher than a working voltage of a piezoresistor under a traditional alternating current input condition, so that a residual voltage is much higher. A high residual voltage may cause a large voltage stress to a bus capacitor and a metal oxide semiconductor MOS tube (MOSFET) of the main power topology circuit, so that the service life of the bus capacitor may be shortened or the bus capacitor may be damaged, and the MOSFET may be damaged more possibly since the shock resistance of the MOSFET is much weaker than that of the bus capacitor.

In an alternating current and direct current input switching power supply in the related art, a PFC main power topology includes a bridged topology, a bridgeless topology, a totem pole topology, a combined transformation topology and the like, a lightning protection and surge protection diode needs to be additionally disposed on these power topology circuits in a traditional protection manner, and after the piezoresistor absorbs most of lightning and surge energies, a residual voltage of the protection circuit is guided into the bus capacitor through the surge protection diode, whereby the main power topology circuit is prevented from being damaged due to the shock on the main power topology circuit, where the surge protection diode may be achieved by one or more diodes.

It can be seen from the above description, a lightning surge protection circuit under a traditional alternating current input may generate a very high residual voltage under an environment of being compatible with an alternating current input and a direct current input, the residual voltage needs to be guided into the bus capacitor through the lightning protection and surge protection diode, and at this time, the very high residual voltage may be absorbed only through a sufficiently large bus capacitor, whereby the voltage stress generated by the residual voltage on the MOSFET and the bus capacitor is reduced, the reliability of the switching power supply is improved, however, the sufficiently large bus capacitor requires to occupy a large space, is high in cost and is generally difficult to implement. Moreover, a traditional lightning surge protection circuit has a protection blind area in an alternating current and direct current input environment, and a problem that the switching power supply cannot be fully protected exists.

An effective scheme to the above-described problems in the related art has not been proposed.

### SUMMARY

Embodiments of the present application provide a lightning surge protection circuit, method and system, a storage medium, and an electronic apparatus, and aim to solve a problem that since a residual voltage of a lightning surge protection circuit in the related art is high, the residual voltage needs to be guided into a bus capacitor through a lightning protection and surge protection diode, and at this time, a very high residual voltage may be absorbed only through a sufficiently large bus capacitor, whereby a voltage stress generated by the residual voltage on the MOSFET and the bus capacitor is reduced, the reliability of the switching power supply is improved, however, the sufficiently large bus capacitor requires to occupy a large space, is high in cost and is generally difficult to implement. Moreover, a problem that a traditional lightning surge protection circuit has a protection blind area in an alternating current and direct current input environment, and thus the switching power supply cannot be fully protected is also solved.

According to an embodiment of the present application, a lightning surge protection circuit is provided. The circuit includes a first circuit and a second circuit. An input end of the first circuit is an input end of the lightning surge protection circuit, and the first circuit is configured to perform a first-level lightning surge protection on a main power topology circuit. An input end of the second circuit is connected to an output end of the first circuit, an output end of the second circuit is configured to be connected to an input end of the main power topology circuit, and the second circuit is configured to perform a second-level lightning surge protection on the main power topology circuit. Each of the first circuit and the second circuit includes a piezoresistor and a gas discharge tube.

According to an embodiment of the present application, a lightning surge protection method is provided. The lightning surge protection method is applied to the lightning surge protection circuit described above and includes described below. A first-level lightning surge protection is performed on the main power topology circuit by using the first circuit. A second-level lightning surge protection is performed on the main power topology circuit by using the second circuit.

According to an embodiment of the present application, a lightning surge protection system is provided. The lightning surge protection system includes a lightning surge protection device and a main power topology circuit connected to the lightning surge protection device, and the lightning surge protection device includes the lightning surge protection circuit described above.

According to another embodiment of the present application, a storage medium is further provided. The storage medium stores computer programs, and the computer programs are configured to, when executed, perform the lightning surge protection method described above.

According to another embodiment of the present application, an electronic apparatus is further provided. The electronic apparatus includes a memory and a processor. The memory stores computer programs, and the processor is configured to execute the computer programs to perform the lightning surge protection method describe above.

According to the present application, since the residual voltage is reduced by the combined use of a multi-level lightning surge protection circuit when a lightning surge protection is performed, however, the multi-level lightning surge protection circuit is a circuit including the piezoresistor and the gas discharge tube, so that a lightning protection and surge protection diode does not need to be used for guiding the residual voltage onto the bus capacitor. Therefore, the lightning protection and surge protection diode may be removed, a capacity of the bus capacitor is reduced, a power density of the switching power supply is improved, the cost is saved, and the reliability of the lightning surge protection of the switching power supply is improved.

### BRIEF DESCRIPTION OF DRAWINGS

FIG. 1 is a schematic diagram of a lightning protection circuit of a switching power supply in the related art;
FIG. 2 is a schematic diagram of a lightning surge protection circuit provided in an embodiment of the present application;
FIG. 3 is a schematic structural diagram of a first circuit 21 provided in an embodiment of the present application;
FIG. 4 is a schematic diagram of another lightning surge protection circuit provided in an embodiment of the present application;
FIG. 5 is a schematic structural diagram of a second circuit 22 provided in an embodiment of the present application;
FIG. 6 is a schematic structural diagram of another second circuit 22 provided in an embodiment of the present application;
FIG. 7 is a schematic structural diagram of another second circuit 22 provided in an embodiment of the present application;
FIG. 8 is a schematic structural diagram of a third circuit 23 provided in an embodiment of the present application;
FIG. 9 is a schematic structural diagram of another third circuit 23 provided in an embodiment of the present application;
FIG. 10 is an overall topological diagram provided in an embodiment of the present application; and
FIG. 11 is a flowchart of a lightning surge protection method provided in an embodiment of the present application.

### DETAILED DESCRIPTION

The present application will be described hereinafter with reference to the accompanying drawings and in conjunction with embodiments.

The terms "first," "second," and the like in the Description and claims of this application, and in the foregoing drawings, are used for distinguishing between similar objects and not necessarily for describing a particular order or sequential order.

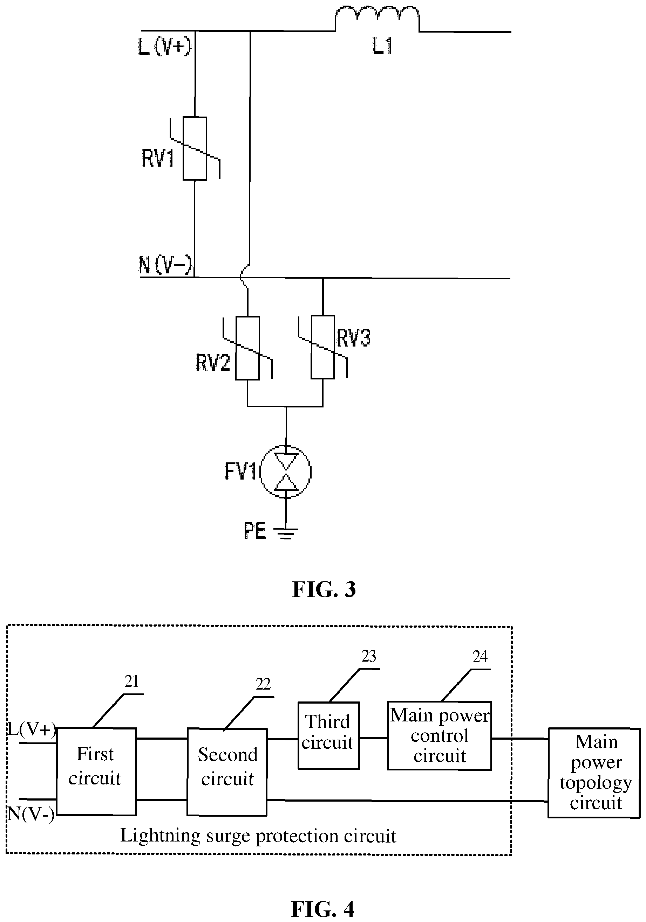

For the problems existing in the related art, a lightning surge protection circuit is provided in an embodiment of the present application, as shown in FIG. 2, the circuit includes a first circuit 21 and a second circuit 22. In an embodiment, an input end of the first circuit 21 is an input end of the lightning surge protection circuit, and the first circuit 21 is configured to perform a first-level lightning surge protection on a main power topology circuit; an input end of the second circuit 22 is connected to an output end of the first circuit 21, an output end of the second circuit 22 is configured to be connected to an input end of the main power topology circuit described above, and the second circuit 22 is configured to perform a second-level lightning surge protection of the main power topology circuit. In an embodiment, both the first circuit 21 and the second circuit 22 described above include a piezoresistor and a gas discharge tube. In an embodiment, a structure of the first circuit 21 may be a circuit structure in the related art, the first circuit 21 is a first-level differential, common mode lightning, and surge protection circuit, and the first circuit is located at an input port to achieve differential, common mode lightning, surge protection. The structure of the first circuit 21 may be seen in FIG. 3, the first circuit 21 is composed of the piezoresistor and the gas discharge tube, a connection relationship between multiple elements may be referred to FIG. 3. In an embodiment, values of multiple elements in the first circuit 21 may be selected according to actual conditions and may be flexibly adjusted in a subsequent use process, for example, piezoresistors RV2 and RV3 in FIG. 3 are connected in series with the gas discharge tube FV1, so that common mode lightning protection and surge protection of L (V+)-PE and N (V-)-PE are achieved, respectively. In an embodiment, the RV1 achieves a differential mode lightning and surge protection between L (V+)-N (V-), and a differential mode inductor L1 is used as a decoupling coil. L1 includes, but is not limited to, a differential mode inductor, and may also be replaced with a common mode inductor. The second circuit 22 is a second-level differential mode lightning and surge protection circuit and is connected in series with the gas discharge tube through the piezoresistor so as to achieve the differential mode lightning and surge protection. The structure of the second circuit 22 will be described in subsequent embodiments herein.

According to the above embodiments, since a residual voltage is reduced by the combined use of a multi-level lightning surge protection circuit when the lightning surge protection is performed, however, the multi-level lightning surge protection circuit is a circuit including the piezoresistor and the gas discharge tube, so that a lightning protection and surge protection diode does not need to be used for guiding the residual voltage onto a bus capacitor, and thus a large-capacity bus capacitor does not need to be used for absorbing the residual voltage, whereby a power density of a switching power supply is improved, the cost is saved, and the reliability of the lightning surge protection of the switching power supply is improved.

In an embodiment, the lightning surge protection circuit described above includes, in addition to the first circuit 21 and the second circuit 22, a third circuit 23 and a main power control circuit 24, it may be seen in FIG. 4, as shown in FIG. 4, an input end of the third circuit 23 is connected to an output end of the second circuit 22, the third circuit 23 is configured to detect a shock electrical signal of the output end of the second circuit 22; an input end of the main power control circuit 24 described above is connected to an output end of the third circuit 23, and an output end of the main power control circuit 24 is configured to be connected to the main power topology circuit, the main power control circuit 24 is configured to control a driving of a metal oxide semiconductor field effect transistor (MOSFET) according to the shock electrical signal, the MOSFET being included in the main power topology circuit (for example, the driving of the MOSFET is turned off in a case where the shock electrical signal is too large). In this embodiment, when the third circuit 23 detects an abnormal high voltage or an abnormal large current signal, the driving of the MOSFET of the main power topology circuit may be directly turned off through the main power control circuit 24, thereby the capability of the lightning surge protection of the switching power supply is improved. In this embodiment, the third circuit 23 and the main power control circuit 24 may be connected into the main power topology circuit in series, so as to achieve the detection of a shock current or voltage and the control of the driving of the MOSFET.

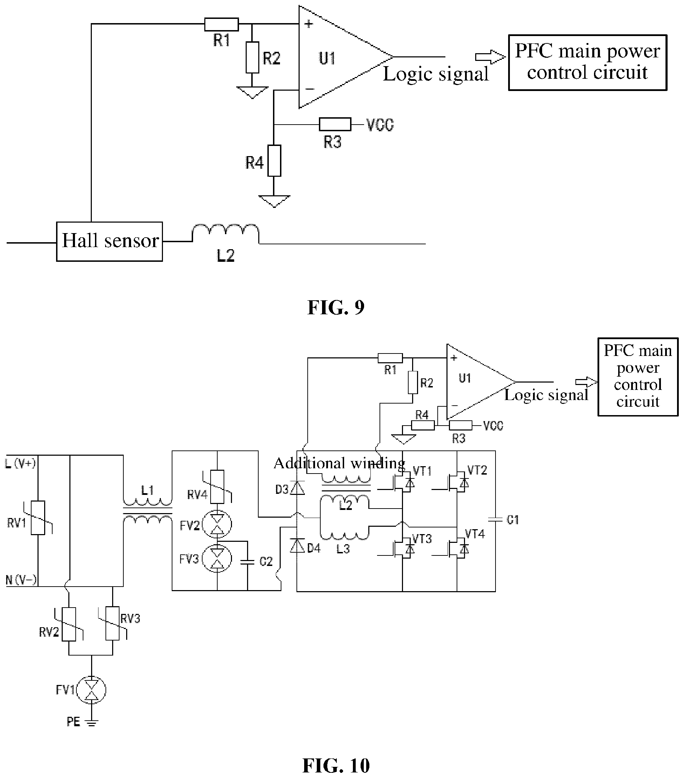

In an embodiment, the lightning surge protection circuit described above further includes a first inductor and a second inductor (it may be seen an inductor LI and an inductor L2 in FIG. 10), and the first inductor is located between the first circuit 21 and the second circuit 22, and the second inductor is located between the second circuit 22 and the main power topology circuit. In an embodiment, the second circuit 22 includes a first piezoresistor and a first gas discharge tube. In an embodiment, a first end of the first piezoresistor described above is connected to a first inductor and a second inductor, a first end of the first gas discharge tube is connected to a second end of the first piezoresistor, and an second end of the first gas discharge tube is connected to the input end of the main power topology circuit. That is to say, the first piezoresistor and the first gas discharge tube are connected in series.

A structure of the second circuit 22 is described below in connection with the accompanying drawings.

In an embodiment, a number of first gas discharge tubes included in the second circuit 22 is one or multiple, and in a case where the number of first gas discharge tubes is multiple, the multiple first gas discharge tubes are used in series.

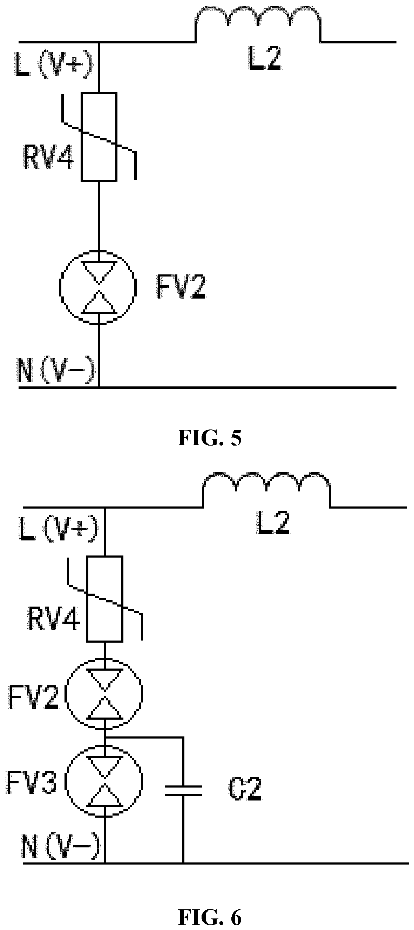

In an embodiment, in a case where the second circuit 22 includes only one gas discharge tube, the structure of the second circuit 22 may be referred to FIG. 5. In an embodiment, an RV4 in FIG. 5 is the first piezoresistor, a FV2 in FIG. 5 is the first gas discharge tube, and in FIG. 5, the RV4 is connected in series with the FV2 and is configured to reduce a residual voltage of the RV1 in the first circuit 21, so that a voltage stress of a bus capacitor connected to a rear end of the second circuit 22 and the MOSFET is reduced, and thus the reliability of lightning surge protection of the switching power supply is improved. On one hand, the inductor L2 may be used as a boost inductor of a circuit, and on the other hand, the inductor L2 may be used as a decoupling inductor for the series connection of the RV4 and the gas discharge tube FV2, and the decoupling inductor is not limited to the boost inductor, but also may use the differential mode inductor or the common mode inductor as decoupling.

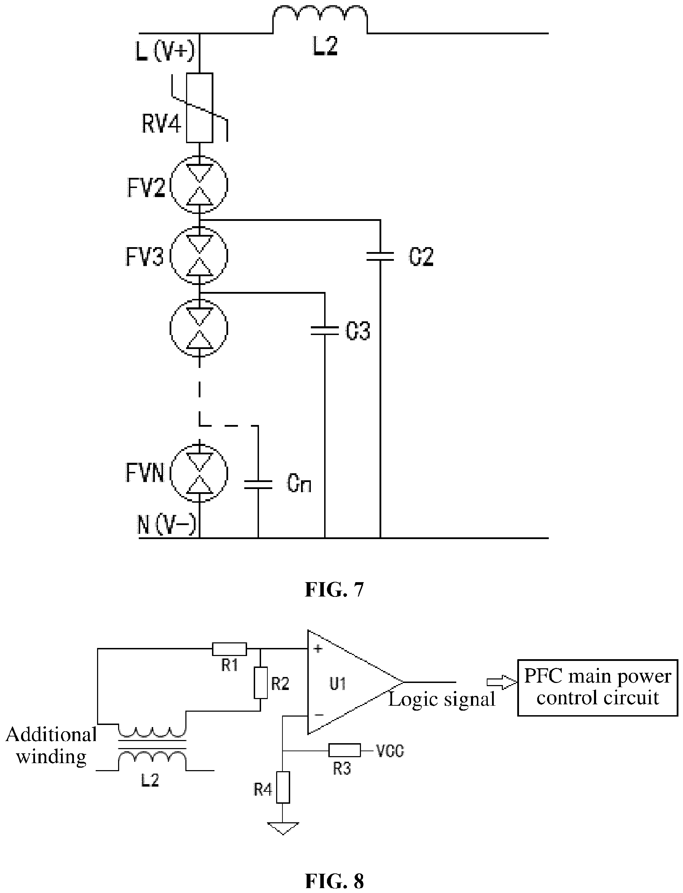

In a case where the second circuit 22 includes two gas discharge tubes, the structure of the second circuit 22 may be referred to FIG. 6. In an embodiment, an RV4 in FIG. 6 is the first piezoresistor, a FV2 and a FV3 in FIG. 6 are two first gas discharge tubes, and in addition, in a case where the second circuit 22 includes multiple gas discharge tubes, the first gas discharge tubes which are not directly connected to the first piezoresistor are connected to a respective first capacitor in parallel, and first ends of multiple first capacitors are connected to the multiple first gas discharge tubes, and second ends of the multiple first capacitors are connected to the input end of the main power topology circuit; in a case where more gas discharge tubes are included in the second circuit 22, the structure of this second circuit 22 may be referred to FIG. 7. In an embodiment, a RV4 in FIG. 7 is the first piezoresistor, and FV2-FVn in FIG. 7 are the more gas discharge tubes. That is to say, the multiple first gas discharge tubes are connected in series to form a gas discharge tube group, and remaining first gas discharge tubes in the gas discharge tube group except for the first gas discharge tube connected to the first piezoresistor are respectively connected to one first capacitor in parallel (i.e., C2-Cn in FIG. 7). In this embodiment, multiple first gas discharge tubes connected in series may be cooperated with the second inductor (such as a boost inductor or other types of inductors, which may be selected through reasonable device parameters during design) to achieve a decoupling effect, and the multiple first gas discharge tubes connected in series are cooperated with a first-level lightning protection circuit (namely, the first circuit 21 described above) to achieve the effect of reducing a protection blind area and reducing the residual pressure.

In an embodiment, the third circuit 23 may be a boost inductor shock current or voltage detection circuit module, which may detect a shock current or voltage by adding an auxiliary winding on a power inductor, and may also detect the shock current or voltage through a current transformer or a Hall sensor. A structure of the third circuit 23 will be described below.

In an embodiment, the lightning surge protection circuit described above further includes a second inductor (like the aforementioned second inductor, it may be referred to L2 in FIG. 10) located between the second circuit 22 and the main power topology circuit, the structure of the third circuit 23 including one of described below.

Structure 1: as shown in FIG. 8, the third circuit 23 includes a first winding (corresponding to an additional winding in FIG. 8), a first resistor (corresponding to a R1 in FIG. 8), a second resistor (corresponding to a R2 in FIG. 8), a third resistor (corresponding to a R3 in FIG. 8), a fourth resistor (corresponding to a R4 in FIG. 8), and a first comparator (corresponding to a Ul in FIG. 8). In an embodiment, the first winding is coupled with the second inductor, a first end of the first winding is connected to a first end of the first resistor, a second end of the first winding is connected to a first end of the second resistor, a second end of the first resistor and a second end of the second resistor are both connected to a first end of an input end of the first comparator, a first end of the third resistor and a first end of the fourth resistor are both connected to a second end of the input end of the first comparator, a second end of the third resistor is configured to output a voltage, a second end of the fourth resistor is grounded, and an output end of the first comparator is connected to the main power control circuit. In an embodiment, the first comparator outputs a logic signal according to an operation result, so as to instruct the main power control circuit to perform a corresponding operation (corresponding to a PFC main power control circuit in FIG. 8, the PFC main power control circuit is a circuit configured to control a PFC main power topology circuit, in practical applications, the main power topology circuit may also be other types of main power topology circuits in addition to the PFC main power topology circuit, and accordingly, the main power control circuit is also a control circuit corresponding to other types of main power topology circuits, which is similar in other drawings described later herein). In FIG. 8, a shock current or voltage is detected by adding an auxiliary winding on a boost inductor L2, a signal is detected through a resistance voltage division, a U1 comparator is used in cooperation, the signal is transmitted to the main power control circuit, a driving of the MOSFET of the circuit is turned off timely, and the reliability of the MOSFET is improved. The inductor L2 includes, but is not limited to, the boost inductor, and the inductor L2 may also be the differential mode inductor or the common mode inductor used as the decoupling inductor in the lightning protection circuit. A shock current or voltage detection module includes, but is not limited to, a module that uses a comparator to detect an abnormal large voltage signal, or a module that uses a controller analog-to-digital converter (ADC) to sample an abnormal large voltage signal.

Structure 2: as shown in FIG. 9, the third circuit 23 described above includes a sensor (for example, a Hall sensor in FIG. 9, but the sensor in this embodiment is not limited to the Hall sensor, but may also be other sensors such as a current transformer, the design of the sensor may change for the purpose of detecting a shock electrical signal (a shock voltage signal and/or a shock current signal), then sending the shock electrical signal to the main power control circuit to achieve the timely turning off of a driving signal of the MOSFET in the main power topology circuit), a fifth resistor (corresponding to a R1 in FIG. 9), a sixth resistor (corresponding to a R2 in FIG. 9), a seventh resistor (corresponding to a R3 in FIG. 9), an eighth resistor (corresponding to a R4 in FIG. 9) and a second comparator (corresponding to a U1 in FIG. 9). In an embodiment, a first end of the sensor is an input end of the third circuit, the second end of the sensor is connected to the second inductor, a third end of the sensor is connected to a first end of the fifth resistor, a second end of the fifth resistor and a second end of the sixth resistor are both connected to a first end of an input end of the second comparator, a first end of the sixth resistor is grounded, and a first end of the seventh resistor and a first end of the eighth resistor are both connected to a second end of the input end of the second comparator, a second end of the seventh resistor is configured to output a voltage, a second end of the eighth resistor is grounded, and an output end of the second comparator is connected to the main power control circuit.

In an embodiment, the first inductor includes one of a differential mode inductor or a common mode inductor.

In an embodiment, the second inductor includes one of a boost inductor, a differential mode inductor, or a common mode inductor.

FIG. 10 is a topological diagram composed of the first circuit 21, the second circuit 22, the third circuit 23, the main power control circuit 24, and the main power topology circuit (i.e., the circuit composed of VT1-VT4 and C1 in FIG. 10) described above, in a case where a surge protection diode is not used, the reliable protection of the main power topology circuit during lightning and surge may be achieved through cooperation with a first-level lightning surge protection circuit, a second-level lightning surge protection circuit and a third-level shock current or voltage signal detection processing circuit (i.e., the third circuit 23 and the main power control circuit 24 described above) in the embodiments of the present application; and an alternating-current and direct-current working environment may be reliably supported, and thus the protection blind area is reduced through reasonable setting of parameters of a differential mode lightning protection device and a common mode lightning protection device. FIG. 10 differs from FIG. 1 in that lightning and surge protection diodes D1 and D2 in FIG. 1 have been removed.

In an embodiment, the main power topology circuit described above includes one circuit of the following circuits: an AC-DC power conversion circuit, such as the PFC main power topology circuit in FIG. 1; a DC-DC power conversion circuit, such as a resonant conversion circuit; an inductor-inductor-capacitance (LLC) full-bridge/half-bridge resonant power conversion topology circuit; a buck power conversion topology circuit; or a phase-shifted full-bridge/half-bridge power conversion topology circuit, etc.

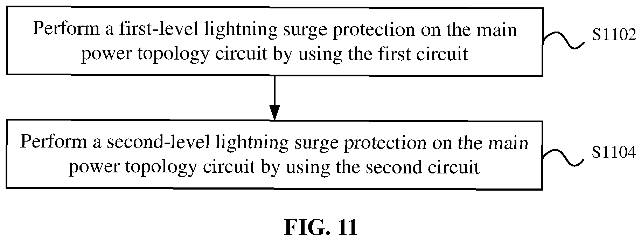

In this embodiment, a lightning surge protection method that may operate on the lightning surge protection circuit described above is provided, FIG. 11 is a flowchart of a lightning surge protection method provided in an embodiment of the present application, as shown in FIG. 11, the process includes steps described below.

In step S 1102, a first-level lightning surge protection is performed on the main power topology circuit by using the first circuit.

In step S1104, a second-level lightning surge protection is performed on the main power topology circuit by using the second circuit.

According to the above embodiments, since a residual voltage is reduced by the combined use of a multi-level lightning surge protection circuit when the lightning surge protection is performed, however, the multi-level lightning surge protection circuit is a circuit including the piezoresistor and the gas discharge tube, so that a lightning protection and surge protection diode does not need to be used for guiding the residual voltage onto a bus capacitor, and thus a large-capacity bus capacitor does not need to be used for absorbing the residual voltage, whereby a power density of a switching power supply is improved, the cost is saved, and the reliability of the lightning surge protection of the switching power supply is improved.

In an embodiment, after the second-level lightning surge protection is performed on the main power topology circuit by using the second circuit described above, the lightning surge protection method described above further includes: a shock electrical signal is detected by using the third circuit. In an embodiment, the shock electrical signal is an electrical signal obtained after the first-level lightning surge protection is performed by using the first circuit and the second-level lightning surge protection is performed by using the second circuit; and a driving of the metal oxide semiconductor field effect transistor (MOSFET) is controlled by using the main power control circuit according to the shock electrical signal, the MOSFET being included in the main power topology circuit.

In an embodiment, the step in which the driving of the metal oxide semiconductor field effect transistor (MOSFET) included in the main power topology circuit is controlled by using the main power control circuit according to the shock electrical signal includes: in a case where the shock electrical signal exceeds a first threshold, the driving of the MOSFET is turned off.

In an embodiment, before the first-level lightning surge protection is performed on the main power topology circuit by using the first circuit, the method described above further includes: a signal input to the lightning surge protection circuit is received, where the signal input to the lightning surge protection circuit is a direct current voltage signal greater than or equal to a second threshold; and a signal input to the lightning surge protection circuit is received, where the signal input to the lightning surge protection circuit is an alternating current voltage signal greater than or equal to a third threshold. That is to say, the lightning surge protection circuit in the embodiments of the present application may reliably support an alternating current and direct current input.

In an embodiment, the second threshold described above includes 400 Vdc.

In an embodiment, the third threshold described above includes 220Vac.

In an embodiment, a lightning surge protection system is further provided. This system includes a lightning surge protection device and a main power topology circuit connected to the lightning surge protection device. In an embodiment, the lightning surge protection device includes the lightning surge protection circuit of any one of the above. In the embodiment, the lightning surge protection device and the main power topology circuit may be independently deployed and may also be integrated together.

The embodiments of the present application further provide a storage medium. The storage medium stores computer programs. In an embodiment, the computer programs are configured to, when executed, perform the lightning surge protection method in any of the embodiments described above.

In this embodiment, the storage medium described above may include, but is not limited to, various media storing computer programs such as a USB flash disk, a read-only memory (ROM), a random access memory (RAM), a removable hard disk, a magnetic disk, or an optical disk.

The embodiments of the present application further provide an electronic apparatus. The electronic apparatus includes a memory and a processor. The memory stores computer programs, and the processor is configured to execute the computer programs to perform the lightning surge protection method in any of the embodiments described above.

In an embodiment, the electronic apparatus described above may further include a transmission device and an input and output device. In an embodiment, the transmission device is connected to the processor described above, and the input and output device is connected to the processor described above.

Following problems in the related art may be solved by adopting schemes in the embodiments of the present application.

A traditional lightning protection circuit may generate a very high residual voltage under a condition of the alternating current and direct current input.

A lightning protection circuit of a traditional main power topology circuit needs to be additionally provided with a large-flux diode to serve as a surge protection diode to be used for absorbing the residual voltage, loss is large when high-power current flows through the diode, so that the overall efficiency of the switching power supply may be reduced, and meanwhile the power density is not conductive to be improved.

The traditional lightning protection circuit needs the large-capacity bus capacitor for absorbing the residual voltage of the lightning protection circuit, however, the large-capacity bus capacitor needs to occupy a large space and is high in cost.

The traditional lightning protection circuit is high in the residual voltage, a large voltage stress may be generated on the bus capacitor and the MOSFET at the time of lightning and surge, and thus the reliability of the switching power supply is affected.

Furthermore, the embodiments of the present application may achieve described below.

The alternating current and direct current input may be reliably supported, and the residual voltage of the lightning protection circuit is significantly reduced.

The protection blind area of lightning and surge is reduced by adopting a two-level lightning protection manner.

The surge protection diode in the traditional lightning protection circuit is removed, and one or more diodes are saved.

The capacity of the bus capacitor is reduced, the power density of the switching power supply is improved, and the cost is reduced.

The lightning and surge time is reduced, the voltage stress of the bus capacitor and the MOSFET is reduced, and the reliability of the switching power supply is improved.

According to the schemes in the embodiment of the present application, the shock current or voltage of the lightning or surge is detected at the moment of the lightning or surge, the driving of the power MOSFET is turned off timely, and the reliability of the switching power supply is improved.

The above-described modules or steps of the present application may be implemented by a general-purpose computing device, the modules or steps may be concentrated on a single computing device or distributed on a network composed of multiple computing devices. In an embodiment, the modules or steps may be implemented by program codes executable by the computing devices, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present application is not limited to any specific combination of hardware and software.

## Claims

1. A lightning surge protection circuit, comprising: a first circuit, wherein an input end of the first circuit is an input end of the lightning surge protection circuit, and the first circuit is configured to perform a first-level lightning surge protection on a main power topology circuit; and
a second circuit, wherein an input end of the second circuit is connected to an output end of the first circuit, an output end of the second circuit is configured to be connected to an input end of the main power topology circuit, and the second circuit is configured to perform a second-level lightning surge protection on the main power topology circuit, and
wherein each of the first circuit and the second circuit comprises a piezoresistor and a gas discharge tube.

2. The lightning surge protection circuit of claim 1, further comprising: a third circuit, wherein an input end of the third circuit is connected to the output end of the second circuit, and the third circuit is configured to detect shock electrical signal of the output end of the second circuit; and
a main power control circuit, wherein an input end of the main power control circuit is connected to an output end of the third circuit, an output end of the main power control circuit is configured to be connected to the main power topology circuit, and the main power control circuit is configured to control a driving of a metal oxide semiconductor field effect transistor, MOSFET, according to the shock electrical signal, comprised in the main power topology circuit.

3. The lightning surge protection circuit of claim 1, further comprising a first inductor and a second inductor, wherein the first inductor is located between the first circuit and the second circuit, and the second inductor is located between the second circuit and the main power topology circuit,
wherein the second circuit comprises a first piezoresistor and a first gas discharge tube; and
wherein a first end of the first piezoresistor is connected to the first inductor and the second inductor, a first end of the first gas discharge tube is connected to a second end of the first piezoresistor, and a second end of the first gas discharge tube is connected to the input end of the main power topology circuit.

4. The lightning surge protection circuit of claim 3, wherein the second circuit comprises at least one the first gas discharge tube;
wherein in a case where the second circuit comprises a plurality of first gas discharge tubes, the plurality of first gas discharge tubes are connected in series to form a gas discharge tube group, and remaining first gas discharge tubes in the gas discharge tube group except for the first gas discharge tube connected to the first piezoresistor are connected to a respective first capacitor in parallel; first ends of a plurality of first capacitors are connected to the plurality of first gas discharge tubes, and second ends of the plurality of first capacitors are connected to the input end of the main power topology circuit.

5. The lightning surge protection circuit of claim 2, further comprising a second inductor located between the second circuit and the main power topology circuit, wherein a structure of the third circuit comprises one of:
the third circuit comprises a first winding, a first resistor, a second resistor, a third resistor, a fourth resistor and a first comparator, wherein the first winding is coupled with the second inductor, a first end of the first winding is connected to a first end of the first resistor, a second end of the first winding is connected to a first end of the second resistor, a second end of the first resistor and a second end of the second resistor are both connected to a first end of an input end of the first comparator, a first end of the third resistor and a first end of the fourth resistor are both connected to a second end of the input end of the first comparator, a second end of the third resistor is configured to be output a voltage, a second end of the fourth resistor is grounded, and an output end of the first comparator is connected to the main power control circuit; or
the third circuit comprises a sensor, a fifth resistor, a sixth resistor, a seventh resistor, an eighth resistor and a second comparator, a first end of the sensor is an input end of the third circuit, the second end of the sensor is connected to the second inductor, a third end of the sensor is connected to a first end of the fifth resistor, a second end of the fifth resistor and a second end of the sixth resistor are both connected to a first end of an input end of the second comparator, a first end of the sixth resistor is grounded, and a first end of the seventh resistor and a first end of the eighth resistor are both connected to a second end of the input end of the second comparator, a second end of the seventh resistor is configured to be output a voltage, a second end of the eighth resistor is grounded, an output end of the second comparator is connected to the main power control circuit, and the sensor comprises a Hall sensor or a current transformer.

6. The lightning surge protection circuit of claim 3 or 4, wherein the first inductor comprises one of a differential mode inductor or a common mode inductor.

7. The lightning surge protection circuit of any one of claims 3 to 6, wherein the second inductor comprises one of a boost inductor, a differential mode inductor, or a common mode inductor.

8. A lightning surge protection method, applied to the lightning surge protection circuit of any one of claims 1 to 8, comprising:
performing, a first-level lightning surge protection on the main power topology circuit by using the first circuit; and
performing, a second-level lightning surge protection on the main power topology circuit by using the second circuit.

9. The method of claim 8, wherein after performing the second-level lightning surge protection on the main power topology circuit by using the second circuit, the method further comprises:
detecting a shock electrical signal by using the third circuit, wherein the shock electrical signal is an electrical signal obtained after the first-level lightning surge protection is performed by using the first circuit and the second-level lightning surge protection is performed by using the second circuit; and
controlling according to the shock electrical signal, a driving of a metal oxide semiconductor field effect transistor, MOSFET, by using the main power control circuit, the MOSFET being comprised in the main power topology circuit.

10. The method of claim 9, wherein controlling, according to the shock electrical signal, the driving of the metal oxide semiconductor field effect transistor, MOSFET, comprised in the main power topology circuit by using the main power control circuit comprises:
in a case where the shock electrical signal exceeds a first threshold, turning off the driving of the MOSFET.

11. The method of any one of claims 8 to 10, wherein before performing the first-level lightning surge protection on the main power topology circuit by using the first circuit, the method further comprises:
receiving a signal input to the lightning surge protection circuit, wherein the signal input to the lightning surge protection circuit is a direct current voltage signal greater than or equal to a second threshold; or,
receiving a signal input to the lightning surge protection circuit, wherein the signal input to the lightning surge protection circuit is an alternating current voltage signal greater than or equal to a third threshold.

12. The method of claim 11, further comprising at least one of:
wherein the second threshold comprises 400 Vdc; or
wherein the third threshold comprises 220 Vac.

13. A lightning surge protection system, comprising a lightning surge protection device and a main power topology circuit connected to the lightning surge protection device, wherein the lightning surge protection device comprises the lightning surge protection circuit of any one of claims 1 to 8.

14. The system of claim 13, wherein the main power topology circuit comprises one circuit of the following:
an alternating current to direct current, AC-DC, power conversion circuit; or
a direct current to direct current, DC-DC, power conversion circuit.

15. A storage medium, storing computer programs, wherein the computer programs are configured to, when executed, perform the lightning surge protection method of any one of claims 8 to 12.

16. An electronic apparatus, comprising a memory and a processor, wherein the memory stores computer programs, and the processor is configured to execute the computer programs to perform the lightning surge protection method of any one of claims 8 to 12.
